# EUROPÄISCHE PATENTSCHRIFT

(11) **EP 0 235 683 B1**
(45) Veröffentlichungstag und Bekanntmachung des Hinweises auf die Patenterteilung: **21.04.1993**
(21) Anmeldenummer: 87102350.3
(22) Anmeldetag: 19.02.1987
(51) Int. Cl.: B23Q 5/54, B23D 45/06

(54) **Holzbearbeitungsmaschine**
Woodworking machine
Machine à travailler le bois

(30) Priorität: 01.03.1986 DE 8605687 U
(43) Veröffentlichungstag der Anmeldung: 09.09.1987
(73) Patentinhaber: Josef Scheppach Maschinenfabrik GmbH & Co., D-89335 Ichenhausen (DE)
(72) Erfinder: Scheppach, Fritz, D-8873 Ichenhausen (DE)
(74) Vertreter: Munk, Ludwig, Dipl.-Ing.

(56) Entgegenhaltungen:
- EP-A- 0 090 744
- EP-A- 0 125 503
- DE-B- 1 147 822
- DE-C- 611 153
- GB-A- 10 212
- GB-A- 435 789
- GB-A- 514 542
- GB-A- 1 532 998

## Beschreibung

Die Erfindung betrifft eine Holzbearbeitungsmaschine, insbesondere Kreissäge, mit einem auf einem Maschinengestell aufgenommenen Tisch, der von einem Bearbeitungswerkzeug durchsetzt ist, das auf einer unterhalb des Tisches vorgesehenen, antreibbaren Welle aufgenommen ist, die auf einem mittels einer Stellspindel in der Höhe verstellbaren Träger positioniert ist, der zusammen mit der Stellspindel auf einem im Maschinengestell schwenkbar gelagerten, mittels einer Stelleinrichtung betätigbaren Schwenkrahmen aufgenommen ist, (siehe ER-A-0125 503).

Bei den bekannten Anordnungen dieser Art sind zur Höhenverstellung und zur Winkelverstellung des Bearbeitungswerkzeugs, d. h. zur Betätigung des Trägers und des Schwenkrahmens, zwei separate, von außen zugängliche Handräder vorgesehen. Hierbei kann es daher zu gegenseitigen Störungen kommen, da diese beiden Handräder in der Regel einander eng benachbart sind. Außerdem hat sich gezeigt, daß sich die Verwendung von zwei Handrädern ungünstig auf die Bedienbarkeit auswirkt. Ein weiterer Nachteil ist darin zu sehen, daß hierbei im Bereich der Gestellverkleidung ein vergleichsweise großer, für beide Handräder ausreichender Durchbruch vorgesehen sein muß.

Hiervon ausgehend ist es daher die Aufgabe der vorliegenden Erfindung, eine Holzbearbeitungsmaschine eingangs erwähnter Art mit einfachen und kostengünstigen Mitteln unter Vermeidung der Nachteile der bekannten Anordnungen so zu verbessern, daß sich eine einfache Bedienbarkeit und eine hohe Bedienungsfreundlich keit ergeben.

Diese Aufgabe wird erfindungsgemäß dadurch gelöst, daß der Schwenkrahmen mittels einer auf ihm in axialer Richtung feststehend aufgenommenen, aus dem Maschinengestell herausgeführten Betätigungswelle verstellbar ist, auf der ein mit der dem Träger zugeordneten Stellspindel drehschlüssig verbundenes Antriebsrad und ein außerhalb des Maschinengestells positioniertes Handrad frei drehbar aufgenommen sind, das in axialer Richtung verschiebbar und in seinen Endstellungen alternativ mit dem Antriebsrad oder der Betätigungswelle kuppelbar ist.

Diese Maßnahmen stellen sicher, daß sowohl für die Höhenverstellung als auch für die Winkelverstellung des Bearbeitungswerkzeugs nur ein Handrad benötigt wird. Eine gegenseitige Störung nebeneinander angeordneter Handräder ist hierbei daher in vorteilhafter Weise nicht zu befürchten, was sich vorteilhaft auf die Bedienungssicherheit und Bedienungsfreundlichkeit auswirkt. Da die Endstellungen des in axialer Richtung verschiebbaren Handrads durch den alternativen gegenseitigen Eingriff von Handrad und Betätigungswelle bzw. Handrad und Antriebsrad definiert sind, wird die Bedienungsfreundlichkeit und Bedienungssicherheit noch unterstützt. Gleichzeitig ergeben die erfindungsgemäßen Maßnahmen infolge der Verwendung von lediglich einem Handrad einen einfachen Maschinenaufbau sowie ein sauberes Maschinenaussehen. Ein weiterer Vorteil der erfindungsgemäßen Maßnahmen ist darin zu sehen, daß die Gestellverkleidung hier infolge der notwendigen Herausführung von lediglich einem Handrad lediglich eine entsprechende Ausnehmung benötigt, was sich vorteilhaft auf die Eigenstabilität und Schwingungssicherheit der Gehäuseverkleidung auswirkt.

In vorteilhafter Weise können die Betätigungswelle und das Antriebsrad mit koaxial zueinander, mit Abstand nebeneinander angeordneten, vorzugsweise als Ritzel ausgebildeten Zahnkränzen versehen sein, zwischen denen das Handrad angeordnet ist, das mit einer die Betätigungswelle umfassenden Gleitbüchse versehen ist, die an ihren Enden mit zum Eingriff mit den einander zugewandten Zahnkränzen bringbaren, vorzugsweise als Innenzahnkränze ausgebildeten Verzahnungen versehen ist. Diese Maßnahmen ergeben eine zuverlässige, formschlüssige und dennoch leicht in und außer Eingriff bringbare Kupplung zwischen dem Handrad und dem Antriebsrad bzw. der Betätigungswelle. Gleichzeitig wird hierbei auch die Bedienbarkeit insofern vereinfacht, als die umlaufenden Zahnkränze und die diesen zugeordneten handradseitigen Verzahnungen praktisch in jeder beliebigen Drehstellung des Handrads in und ausser gegenseitigen Eingriff bringbar sind.

Eine weitere vorteilhafte Maßnahme kann darin bestehen, daß das Antriebsrad mit einer den zugehörigen Zahnkranz aufweisenden Nabe versehen ist und die Betätigungswelle mit einer den zugehörigen Zahnkranz tragenden Hülse fest verbunden ist, an der eine an einem Innenbund der auf der Nabe bzw. der Hülse geführten Gleitbüchse des Handrads angreifende, die Betätigungswelle umfassende Feder abgestützt ist. Diese Maßnahmen ergeben eine einfache Herstellbarkeit, da die verzahnten Teile als Aufsteckteile ausgebildet sind. Der Durchmesser der Betätigungswelle kann daher in vorteilhafter Weise auf der gesamten Wellenlänge konstant sein. Dadurch, daß das Handrad mit seiner Gleitbüchse auf der wellenseitig festgelegten Hülse bzw. das Antriebsrad tragenden Nabe aufgenommen ist, kann trotz des konstanten Wellendurchmessers ein büchsenseitiger Innenbund vorgesehen sein. Die hieran sich abstützende Feder stellt sicher, daß das Handrad automatisch in die in der Regel öfter benötigte Arbeitsposition, hier in die zur Höhenverstellung benötigte Endstellung geschoben wird, wodurch sich die Bedienbarkeit weiter vereinfacht.

In weiterer Fortbildung der übergeordneten Maßnahmen kann der vorzugsweise als auf einer zugeordneten Längsführung verschiebbar gelagerter Schlitten ausgebildete Träger über einen Schwenkhebel mit einem auf dem Schwenkrahmen gelagerten Kniehebel verbunden sein, der über einen weiteren Schwenkhebel mit einer im Gewindeeingriff mit der Stellspindel stehenden, auf dem Bügel geführten Mutter ist. Diese Maßnahmen stellen sicher, daß die Stellspindel und die Betätigungswelle parallel zueinander ausgerichtet sein können, so daß das auf der Betätigungswelle angeordnete, der Stellspindel zugeordnete Antriebsrad mittels eines einfachen Kettentriebs etc. mit der Stellspindel verbunden sein kann.

Zweckmäßig kann dabei die Stellspindel auf einem auf dem Schwenkrahmen schwenkbar aufgenommenen und auf einer Spannschraube verstellbaren Lagerbügel aufgenommen sein. Hierbei ist es möglich die Spannung der Kette nachzustellen.

Eine weitere zu bevorzugende Fortbildung der übergeordneten Maßnahmen kann darin bestehen, daß die Betätigungswelle im Zahneingriff mit wenigstens einem gestellfest angeordneten Lagerschild steht, der hierzu mit einer vorzugsweise als Randverzahnung ausgebildeten, zur im Bereich der Verschneidung des Bearbeitungswerkzeugs mit der Tischoberfläche liegenden Schwenkachse des Schwenkrahmens konzentrischen Zahnreihe versehen ist und der außerhalb dieser Zahnreihe mindestens eine hierzu konzentrische Bogenausnehmung aufweist, in die wenigstens ein im Bereich einer Stirnseite des Schwenkrahmens befestigter Gleitschuh eingreift. Diese Maßnahmen ermöglichen trotz der schnittrichtungsparallelen Schwenkachse des Schwenkrahmens eine schnittrichtungsparallele Anordnung der Betätigungswelle und in Verbindung mit den weiter oben geschilderten Maßnahmen auch der Stellspindel. Das auf der Betätigungswelle anzuordnende Handrad kann daher in vorteilhafter Weise einfach im Bereich der Maschinenbedienungsseite vorgesehen sein. Dennoch ermöglichen die genannten Maßnahmen einen einfachen Aufbau sowie eine zuverlässige Schwenklagerung des Schwenkrahmens. Ein weiterer Vorteil der hier vorgesehenen Stift-Schlitzverbindung ist darin zu sehen, daß sich praktisch eine scharnierlose Lagerung des Schwenkrahmens ergibt. Die Schwenkachse kann daher in vorteilhafter Weise die Verschneidungslinie von Bearbeitungswerkzeug und Tischoberfläche sein, ohne daß die Tischfläche hierdurch beeinträchtigt würde. Hierdurch wird daher auch sichergestellt, daß bei einer Winkelverstellung des Bearbeitungswerkzeugs dieses nicht seitlich wandert, was sich ebenfalls vorteilhaft auf die Bedienungsfreundlichkeit auswirkt,

Eine weitere zweckmäßige Maßnahme kann darin bestehen, daß die mit dem Lagerschild bzw. den Lagerschilden zusammenwirkende Verzahnung bzw. zusammenwirkenden Verzahnungen der Betätigungswelle jeweils an einen auf der Betätigungswelle fixierten Ring angeformt ist bzw. sind. Auch diese Maßnahme trägt zur Vereinfachung der Herstellung bei.

In vorteilhafter Weise kann der Schwenkrahmen mit einer über seiner Länge durchgehenden, vorzugsweise als Rohr ausgebildeten Tragschiene versehen sein, auf die vorzugsweise zwei Säulen lotrecht aufgesetzt sind, auf denen an dem als Schlitten ausgebildeten Träger befestigte Muffen gleitend geführt sind. Hierdurch ergeben sich ein einfacher und stabiler Aufbau des Schwenkrahmens sowie eine einfache und stabile Gleitlagerung des Schlittens.

Die als Rohr ausgebildete Tragschiene kann dabei in vorteilhafter Weise auch zur Aufnahme des die Stellspindel aufnehmenden Bügels sowie zur Bildung eines der Betätigungswelle zugeordneten Tunnels dienen.

Zweckmäßig kann der Schwenkrahmen einen an die Tragschiene auf der dem Träger gegenüberliegenden Seite angesetzten, nach oben offenen Spanfangkasten aufweisen, in den das Betätigungswerkzeug eingreift und der mit einer Auswurföffnung versehen ist, an die ein Auswurfstutzen angesetzt sein kann. Diese Maßnahmen ergeben in vorteilhafter Weise eine hohe Staubsicherheit, was sich ebenfalls vorteilhaft auf die Bedienbarkeit auswirkt.

In weiterer Fortbildung der übergeordneten Maßnahmen kann der vorzugsweise in Form eines teilweise offenen Kastens ausgebildete Träger auf seiner Unterseite einen hängend angeordneten Antriebsmotor und auf seiner Oberseite Lagerböcke für die antreibbare Welle tragen, die in die Spanfangkammer hineinragt und mit der Motorwelle mittels eines vorzugsweise als Riementrieb ausgebildeten Vorgeleges verbunden ist. Diese Ausgestaltung ermöglicht eine gute Ausnutzung des zur Verfügung stehenden Schwenk- und Stellraums.

Weitere vorteilhafte Ausgestaltungen und zweckmäßige Weiterbildungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen:
- Figur 1: einen Teillängsschnitt durch eine erfindungsgemäße Holzkreissäge bei seitlich neben dem Sägenblatt radial geschnittener Antriebswelle,
- Figur 2: den Schwenk- und Höhenverstellantrieb der Anordnung gemäß Figur 1 in vergrößerter Darstellung,
- Figur 3: eine Frontansicht der Anordnung gemäß Figur 1 bei teilweise abgenommener Gestellverkleidung und
- Figur 4: einen Querschnitt durch den Schwenkrahmen und den auf diesem aufgenommenen Schlitten.

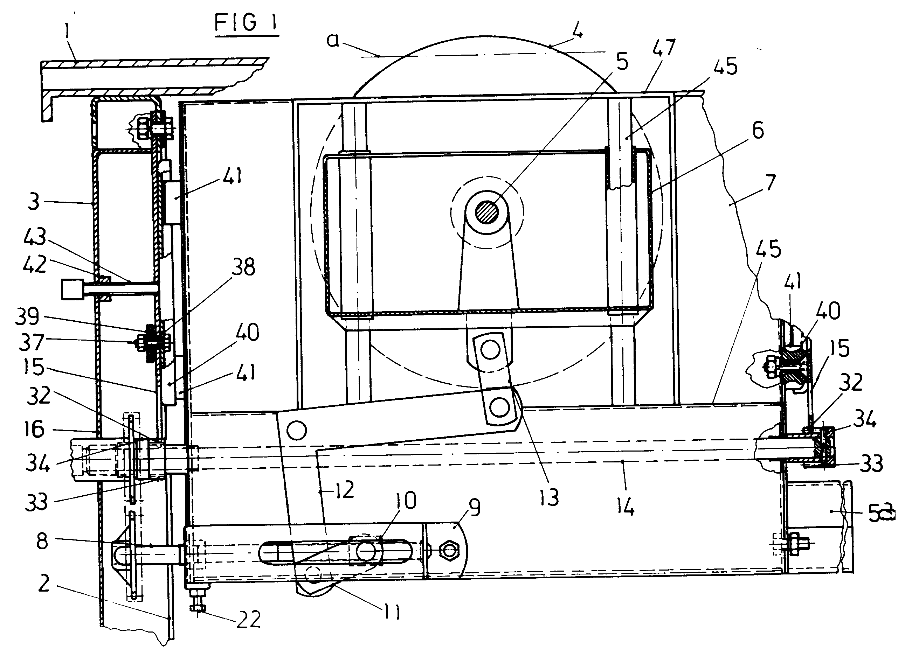

Der Aufbau und die Wirkungsweise einer Holzkreissäge sind an sich bekannt und bedürfen daher im vorliegenden Zusammenhang keiner näheren Erläuterung mehr. Die der Figur 1 zugrundeliegende Kreissäge besteht aus einem Maschinengestell, auf dem ein Tisch 1 aufgenommen ist. Das Maschinengestell enthält vier Standbeine 2, die durch eine Gestellverkleidung 3 bildende Bleche miteinander verbunden sind. Der Tisch 1 ist mit einer hier nicht näher dargestellten, schlitzförmigen Ausnehmung versehen, durch die ein Sägenblatt 4 hindurchgreift. Das Sägenblatt 4 ist unterhalb des Tisches 1 auf einer mit einem entsprechenden Spannkopf versehenen, antreibbaren Welle 5 aufgenommen. Das Sägenblatt 4 kann gegenüber dem Tisch 1 in der Höhe verstellt und zwischen einer zum Tisch lotrechten Stellung und einer zum Tisch unter 45° geneigten Stellung verschwenkt werden. Hierzu ist die Welle 5 natürlich samt zugeordnetem Antriebsaggregat auf einem zugeordneten, hier durch einen Schlitten 6 gebildeten Träger aufgenommen, der in der Höhe verstellbar auf einem schwenkbar im Maschinengestell aufgenommenen Schwenkrahmen 7 gelagert ist.

Zur Höhenverstellung des Schlittens 6 dient eine in Schnittrichtung angeordnete Stellspindel 8. Diese ist auf einem am Schwenkrahmen 7 ge-halterten Lagerbügel 9 in axialer Richtung feststehen aufgenommen und befindet sich im Gewindeeingriff mit einer auf dem Lagerbügel 9 geführten Mutter 10, die über einen Schwenkhebel 11 mit einem am Schwenkrahmen 7 gelagerten Kniehebel 12 verbunden ist, der über einen weiteren Schwenkhebel 13 am Schlitten 6 angreift. Durch Drehen der in axialer Richtung fixierten Stellspindel 8 wird die Mutter 10 in axialer Richtung verschoben. Diese Axialbewegung wird durch den Kniehebel 12 und die hiermit verbundenen Schwenkhebel 11, 13 in eine Hub- bzw. Senkbewegung des Schlittens 6 und damit des Sägenblatts 4 umgesetzt. Zum Schwenken des Schwenkrahmens 7 dient eine parallel zur Stellspindel 8 angeordnete, ebenfalls auf dem Schwenkrahmen 7 in axialer Richtung feststehend aufgenommene Betätigungswelle 14. Diese befindet sich im Zahneingriff mit am Maschinengestell stationär befestigten, parallel zu den vorderen und hinteren Stirnseiten des Schwenkrahmens 7 angeordneten Lagerschilden 15, auf denen der Schwenkrahmen 7 um seine Schwenkachse a schwenkbar aufgehängt ist. Die stationären Lagerschilde 15 sind hier mit die vorderen bzw. hinteren Standbeine 2 paarweise mit-einander verbindenden Gestelltraversen verschraubt und hinterhalb der Abdeckfläche 3 angeordnet. Durch Drehen der Betätigungswelle 14 können der Schwenkrahmen 7 und damit das hierauf aufgenommene Sägenblatt 4 um die Achse a geschwenkt werden.

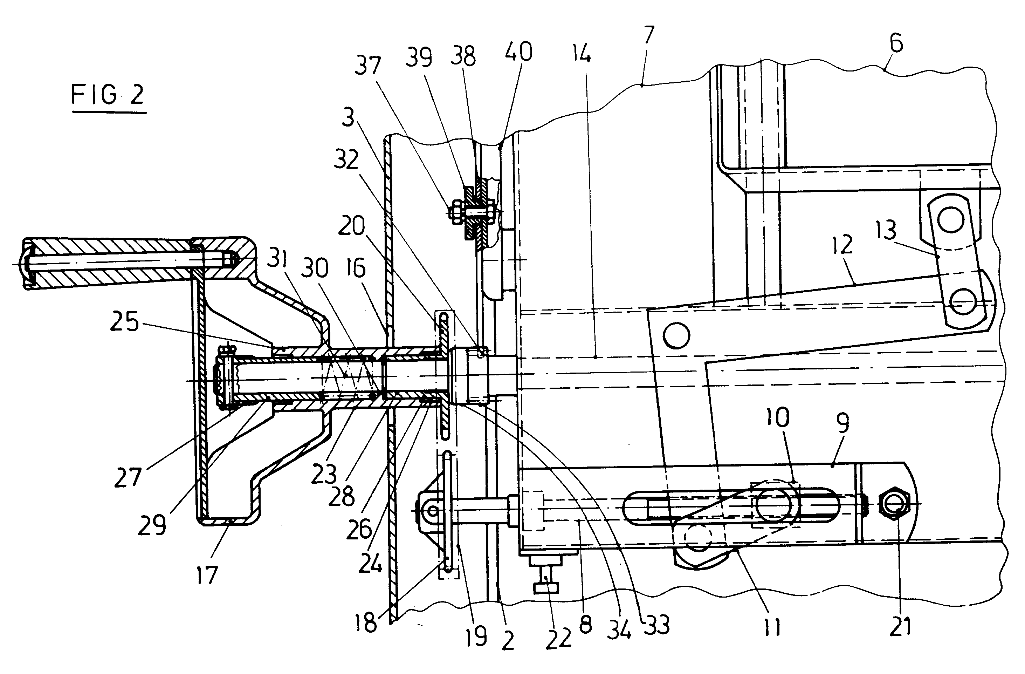

Die Betätigungswelle 14 ist hierzu, wie am besten aus Figur 2 erkennbar ist, im Bereich zwischen den beiden bedienungsseitigen Standbeinen 2 aus dem Maschinengestell herausgeführt. Das von der Betätigungswelle 4 durchsetzte Abdeckblech 3 ist dabei mit einem der auf dem Schwenkrahmen 7 angeordneten und daher dessen Schwenkbewegung mitmachenden Betätigungwelle 14 zugeordneten Bogenschlitz 16 versehen. Auf das aus dem Maschinengestell herausragende Ende der Betätigungswelle 14 ist ein Handrad 17 aufgesetzt, das sowohl zur Einleitung einer Schwenkbewegung als auch einer Höhenverstellung des Sägenblatts 14 dient und dementsprechend alternativ mit der Betätigungswelle 14 oder der Stellspindel 8 verbindbar ist. Die Stellspindel 8 ist dabei mit einem aufgestifteten Treibrad 18 versehen, das über ein Umlaufelement, hier in Form einer Kette 19, mit einem auf der Betätigungswelle 14 frei drehbar angeordneten, axial gesicherten Antriebsrad 20 antriebsmäßig verbunden ist. Zum Spannen der Kette 19 ist der die Stellspindel 8 aufnehmende Lagerbügel 9 mittels einer Halteschraube 21 schwenkbar auf dem Schwenkrahmen 7 gelagert und mittels einer Spannschraube 22 in der gewünschten Schwenkstellung sicherbar. Das Handrad 17 ist frei drehbar und in axialer Richtung verschiebbar auf der Betätigungswelle 14 angeordnet. Das Handrad 17 besitzt eine die Betätigungswelle 14 umfassende Büchse 23, die im Bereich ihrer Enden mit jeweils einer als Innenzahnkranz 24 ausgebildeten Verzahnung 24 bzw. 25 versehen ist. Die Verzahnungen 24 bzw. 25 sind ersichtlich koaxial zueinander angeordnet. Das Antriebsrad 20 und die Betätigungswelle 14 sind mit einander zugewandten` die Büchse 23 des Handrads 17 mit Abstand zwischen sich einschließenden, als Zahnritzel 26 bzw. 27 ausgebildeten, koaxialen Zahnkränzen versehen, deren Teilung und Durchmesser auf die Teilung und den Durchmesser des jeweils benachbarten Innenzahnkranzes 24 bzw. 25 abgestimmt sind. Der axiale Abstand der Zahnritzel 26 bzw. 27 ist etwas größer als die Länge der Gleitbüchse 23 des Handrads 17, so daß dieses durch axiale Verschiebebewegung alternativ in entsprechenden Zahneingriff mit der Betätigungswelle 14 bzw. dem Antriebsrad 20 gebracht werden kann.

Das zum Antriebsrad 20 gehörende Zahnritzel 26 ist an eine das Antriebsrad 20 aufnehmende, die Betätigungswelle 14 umfassende Nabe 28 angeformt. Das mit der Betätigungswelle 14 verbundene Zahnritzel 27 ist an eine auf das Ende der Betätigungswelle 14 aufgesteckte, die Nabe 28 hintergreifende, mit der Betätigungswelle 14 verstiftete Hülse 29 angeformt, deren Durchmesser ausserhalb der Zahnung dem Durchmesser der Nabe 28 entspricht. Die Gleitbüchse 23 des Handrads 17 ist auf den verzahnungslosen Abschnitten der Nabe 28 bzw. der Hülse 29 verschiebbar aufgenommen und mit einem zwischen die Nabe 28 und die Hülse 29 eingreifenden Innenbund 30 versehen, an dem eine an der mit der Betätigungswelle 14 fest verbundenen Hülse 29 abgestützte Druckfeder 31 angreift. Diese bringt automatisch den antriebsradseitigen Innenzahnkranz 24 des Handrads 17 zum Eingriff mit dem Zahnritzel 26 des Antriebsrads 20. Diese Stellung liegt den Figuren 1 und 2 zugrunde. Das Handrad 17 befindet sich somit automatisch in der zur Bewerkstelligung einer Höhenverstellung des Sägenblatts 4 benötigten Position. Zur Bewerkstelligung einer Schwenkbewegung des Sägenblatts 4 wird das Handrad 17 entgegen der Kraft der hieran angreifenden Druckfeder 31 so weit nach außen, d. h. vom Maschinengestell weggezogen, bis der handradseitige Innenzahnkranz 27 zum Eingriff mit dem am äußeren Ende der Betätigungswelle 14 vorgesehenen Zahnritzel 25 kommt.

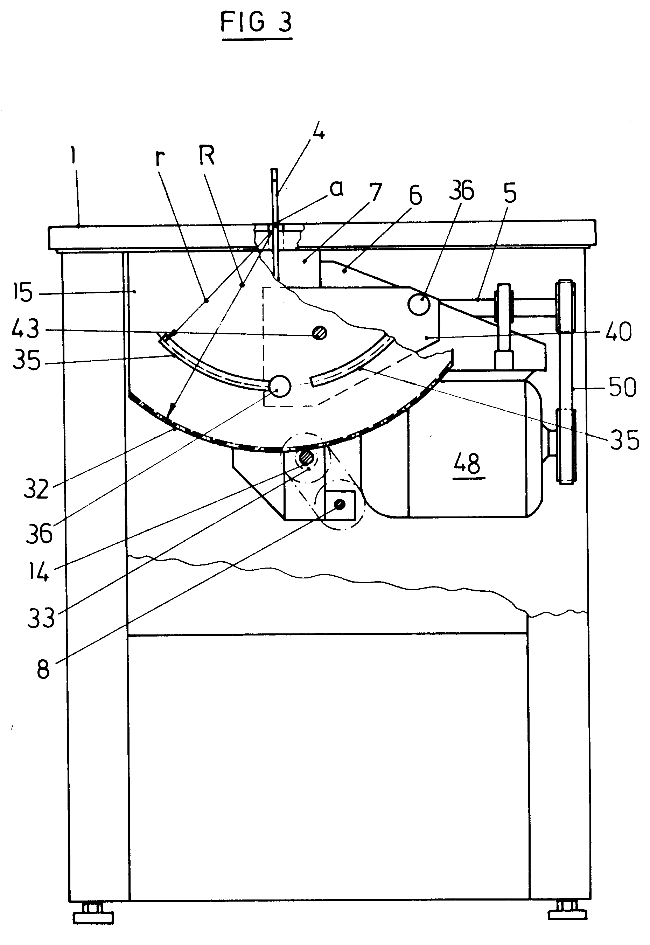

Die in Figur 1 durch eine strichpunktierte Linie angedeutete Schwenkachse a des Schwenkrahmens 7 soll zur Vermeidung eines seitlichen Wanderns des Sägenblatts 4 im Falle einer Schwenkbewegung mit der Verschneidungslinie des Sägenblatts 4 mit der Oberfläche des Tisches 1 zusammenfallen. Die Betätigungswelle 14 und die Stellspindel 8 sind parallel zu dieser Schwenkachse a ausgerichtet. Die dementsprechend in Schnittrichtung verlaufende Betätigungswelle kann somit im Bereich der Bedienungsseite aus dem Maschinengestell herausgeführt sein. Die den Schwenkrahmen 7 aufnehmenden Lagerschilde 15 sind, wie am besten aus Figur 3 erkennbar ist, mit einer zur Schwenkachse a konzentrischen, hier als Randverzahnung 32 ausgebildeten Zahnreihe mit dem Radius R versehen, die, wie die Figuren 1 bis 3 erkennen lassen im Zahneingriff mit auf der über die Länge des Schwenkrahmens 7 durchgehenden Betätigungswelle 14 angeordneten Zahnkränzen 33 sind. Diese können direkt an die Betätigungswelle 14 angeformt sein. Im dargestellten Ausführungsbeispiel sind, wie die Figuren 1 und 2 erkennen lassen, zur Vereinfachung der Herstellung auf die Betätigungswelle 14 im Bereich der hinteren und vorderen Lagerschilde 15 aufgesetzte und mit der Betätigungswelle 14 verstiftete Ringe 34 vorgesehen, die jeweils mit einem mit dem benachbarten Lagerschild 15 zusammenwirkenden Zahnritzel 33 versehen sind.

Zur Lagerung des Schwenkrahmens 7 sind die diesen zwischen sich aufnehmenden, gestellfest angeordneten Lagerschilde 15, wie die Figur 3 am besten erkennen läßt, mit konzentrisch zur Schwenkachse a verlaufenden, den Radius r aufweisenden Bogenausnehmungen, hier in Form von Bogenschlitzen 35 versehen, in die im Bereich der jeweils benachbarten Schwenkrahmenstirnseite befestigte Gleitschuhe 36 eingreifen. Diese können, wie am besten aus Figuren 1 und 2 erkennbar ist, auf eine am zugehörigen Lagerschild 15 anliegende Wandung des Schwenkrahmens 7 aufgesetzt und durch eine Schraube 37 hiermit verspannt sein, so daß eine Einstellung erfolgen kann. Die Gleitschuhe 36 besitzen, wie Figuren 1 und 2 weiter erkennen lassen, jeweils einen durch den zugeordneten Bogenschlitz 35 hindurchgreifenden Klotz 38, hier in Form eines mit dem Radius r gebogenen Formstücks, und einen hieran angeformten, den Rand des zugeordneten Bogenschlitzes 35 hintergreifenden Flansch 39. Hierdurch ergibt sich somit eine formschlüssige, spielfreie und wackelsichere Führung des Schwenkrahmens 7 auf den gestellfest angeordneten Lagerschilden 15. Zur Bewerkstelligung einer großflächen Anlage des Schwenkrahmens 7 an den Lagerschilden 15 ist der Schwenkrahmen 7 im Bereich seiner Stirnseiten mit jeweils einem am benachbarten Lagerschild 15 anliegenden, die betreffenden Gleitschuhe 36 tragenden Gleitteller 40 versehen. Diese Gleitteller 40 sind auf schwenkrahmenseitig abgestützten Distanzstücken 41 aufgenommen und so konfiguriert, daß sie unabhängig von der Stirnseitenkonfiguration des sie tragenden Schwenkrahmengestells die jeweils benötigten Gleitschuhe 36 aufnehmen können und gleichzeitig eine Kollision des Schwenkrahmengestells mit maschinengestellseitig vorgesehenen Halteschrauben etc. verhindern. Zur Sicherung der jeweils eingestellten Schwenkstellung ist ein Lagerschild 15, hier das bedienungsseitige Lagerschild 15, von einem am benachbarten Gleitteller 40 anpreßbaren, als in eine gestellseitig fest positionierte Mutter 42 einschraubbare Spannschraube 43 ausgebildeten Blockierstift durchsetzt, der wie Figur 1 weiter erkennen läßt, aus dem Maschinengestell herausgeführt und außerhalb hiervon mit einem Betätigungsknopf versehen ist.

Im dargestellten Ausführungsbeispiel ist jeder Lagerschild 15, wie Figur 3 weiter zeigt, mit zwei seitlich gegeneinander versetzten, mit gleichem Radius r versehenen Bogenschlitzen 35 versehen, in die jeweils ein Gleitstück 36 eingreift. Die Länge/der Bogenschlitze 35 entspricht dabei dem gewünschten maximalen Schwenkwinkel des Schwenkrahmens 7 und damit des Sägenblatts 4, der hier ausgehend von der der Figur 3 zugrundeliegenden, zum Tisch 1 senkrechten Stellung des Sägenblatts 4 45° nach rechts, d. h. zur Längsanschlagseite des Tisches hin, beträgt. Die Bogenschlitze 35 erstrecken sich dementsprechend von der der Figur 3 zugrundeliegenden Position des jeweils zugeordneten Gleitschuhs 36 um 45° nach links, d. h. gegenläufig zur gewünschten Schwenkrichtung des den Tisch 1 überragenden Bereichs des Sägenblatts 4. In der jeweiligen Endstellung liegen die Gleitstücke 36 an den Schlitzenden an, so daß sich eine feste Begrenzung der maximalen Schwenkbewegung und insbesondere ein leichtes Auffinden der der Figur 3 zugrundeliegenden Normalstellung des Sägenblatts 4 ergeben.

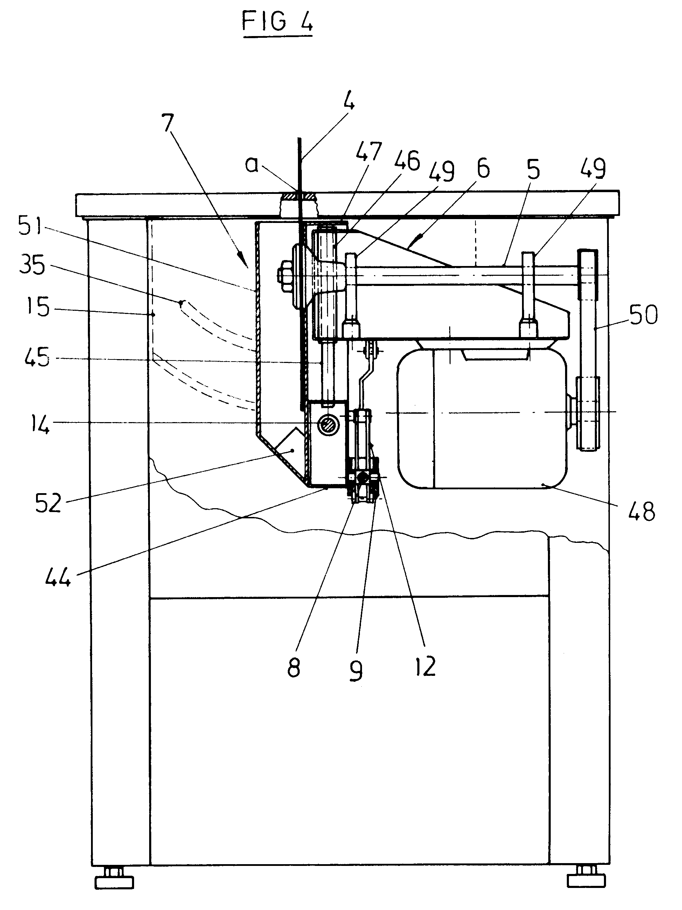

Der Schwenkrahmen 7, dessen Konfiguration aufgrund der Verwendung der stirnseitigen Gleitteller 40 unabhängig von der erforderlichen Positionierung der Gleitschuhe 36 ist, besitzt, wie Figur 4 am besten erkennen läßt, einen über seine ganze Länge durchgehende Tragschiene 44, an der der Kniehebel 12 und der der Stellspindel 8 zugeordnete Lagerbügel 9 gelagert sind. Die Tragschiene 44 ist hier als Vierkantrohr ausgebildet, das einen Tunnel für die über die ganze Länge des Schwenkrahmens 7 durchgehende und die mit dem vorderen bzw. hinteren Lagerschild 15 zusammenwirkenden Zahnritzel 32 tragende Betätigungswelle 14 bildet. Auf die genannte Tragschiene sind zur Aufnahme des Schlittens 6 zwei nebeneinander angeordnete Säulen 45 lotrecht aufgesetzt. Der Schlitten 6 ist mit auf die Säulen 45 aufgeschobenen Verschiebemuffen 46 versehen. Zur Stabilisierung der Säulen 44 sind diese, wie die Figuren 1 und 4 erkennen lassen, mit ihrem oberen Ende am Joch eines auf die Tragschiene 45 aufgesetzten Portalrahmens 47 gehalten. Der Schlitten 6 ist als teilweise offener, die Enden der Verschiebemuffen 46 aufnehmender Kasten ausgebildet, der in vom Sägenblatt 4 wegweisender Richtung über die Tragschiene 44 auskragt. Auf der Unterseite des den Schlitten 6 bildenden Kastenträgers ist ein hängend angeordneter Antriebsmotor 48 befestigt. Auf der dem Antriebsmotor 48 gegenüberliegenden Oberseite des Schlittens 6 trägt dieser Lagerböcke 49 für die das Sägenblatt 4 aufnehmende Welle 5, die mit der Motorwelle über ein hier als Riementrieb 50 ausgebildetes Vorgelege verbunden ist.

Die auf den Lagerböcken 49 aufgenommene Welle 5 ist zwischen den voneinander beabstandeten Säulen 45 bzw. Verschiebemuffen 46 hindurchgeführt und greift mit ihrem. das Sägenblatt 4 aufnehmenden Spannkopf in einen an die Tragschiene 44 auf der dem Lagerbügel 9 und dem Kniehebel 12 gegenüberliegenden Seite, d. h. an der vom Schlitten 6 abgewandten Seite angesetzten Spanfangkasten 51 ein. Dieser ist für das Sägenblatt 4 nach oben offen und bildet praktisch die rückwärtige Begrenzung des die Säulen 45 umgreifenden Portalrahmens 47. Der Spanfangkasten 51 ist im Bereich seines unteren Endes mit einer stirnseitig vorgesehenen Auswurföffnung 52 versehen, an die, wie Figur 1 weiter zeigt, ein Auswurfstutzen 53 angesetzt sein kann, der aus dem Maschinengestell herausgeführt ist. Dieser Auswurfstutzen 53 ist hier, wie Figur 1 weiter erkennen läßt, auf der der Bedienungsseite gegenüberliegenden Gestellseite vorgesehen, so daß die Zugänglichkeit des Handrads 17 hierdurch nicht beeinträchtigt wird. Das im Bereich der vorderen Maschinenseite vorgesehene Abdeckblech ist dabei mit einem dem Auswurfstutzen 53 zugeordneten Bogenschlitz versehen. Zur Bewerkstelligung eines zuverlässigen Auswurfs der anfallenden Sägespäne und zur Verhinderung einer unerwünschten Verwirbelung der Sägespäne im Spanfangkasten 51 kann dieser mit hier nicht näher dargestellten Leit- und Prallblechen versehen sein.

## Patentansprüche

1. Holzbearbeitungsmaschine, insbesondere Kreissäge, mit einem auf einem Maschinengestell (2, 3) aufgenommenen Tisch (1), der von einem Bearbeitungswerkzeug (4) durchsetzt ist, das auf einer unterhalb des Tisches (1) vorgesehenen, antreibbaren Welle (5) aufgenommen ist, die auf einem mittels einer Stellspindel (8) in der Höhe verstellbaren Träger (6) positioniert ist, der zusammen mit der Stellspindel (8) auf einem im Maschinengestell schwenkbar gelagerten, mittels einer Stelleinrichtung betätigbaren Schwenkrahmen (7) aufgenommen ist dadurch gekennzeichnet, daß der Schwenkrahmen (7) mitteils einer auf ihm in axialer Richtung feststehend aufgenommenen, aus dem Maschinengestell herausgeführten Betätigungswelle (14) verstellbar ist, auf der ein mit der Stellspindel (8) drehschlüssig verbundenes Antriebsrad (20) und ein außerhalb des Maschinengestells positioniertes Handrad (17) frei drehbar aufgenommen sind, das in axialer Richtung verschiebbar und in seinen Endstellungen alternativ mit dem Antriebsrad (20) oder der Betätigungswelle (14) kuppelbar ist.

2. Holzbearbeitungsmaschine nach Anspruch 1, dadurch gekennzeichnet, daß die Betätigungswelle (14) und das hierauf aufgenommene Antriebsrad (20) mit koaxialen, mit Abstand einander gegenüberliegenden Zahnkränzen (Zahnritzel 26 bzw. 27) versehen sind, zwischen denen das Handrad (17) angeordnet ist, das mit einer die Betätigungswelle (14) umfassenden Gleitbüchse (23) versehen ist, die an ihren Enden mit zum Eingriff mit den Zahnkränzen (Zahnritzel 26 bzw. 27) bringbaren Verzahnungen (Innenzahnkränze 24 bzw. 25) versehen ist, wobei vorzugsweise das Antriebsrad (20) mit einer den zugeordneten Zahnkranz aufweisenden Nabe (28) versehen und die Betätigungswelle (14) mit einer den zugehörigen Zahnkranz tragenden Hülse (29) fest verbunden ist, an der eine an einem Innenbund (30) der auf der Nabe (28) bzw. Hülse (29) aufgenommenen Gleitbüchse (23) des Handrads (17) angreifende, die Betätigungswelle (14) umfassende Feder (31) abgestützt ist.

3. Holzbearbeitungsmaschine nach einem der vorhergehenden Ansprüche dadurch gekennzeichnet, daß die vorzugsweise in axialer Richtung feststehende Stellspindel (8) etwa parallel zur ebenfalls in axialer Richtung feststehenden Betätigungswelle (14) angeordnet und mit einem mit dem Antriebsrad (20) durch ein vorzugsweise als Kette (19) ausgebildetes Umlaufelement verbundenen Treibrad (18) versehen ist.

4. Holzbearbeitungsmaschine nach einem der vorhergehenden Ansprüche, dadurch gekennzeichnet, daß die Stellspindel (8) auf einem auf dem Schwenkrahmen (7) schwenkbar aufgenommenen und mittels einer Spannschraube (22) verstellbaren Lagerbügel (9) gelagert ist und daß der vorzugsweise als auf einer zugeordneten Längsführung des Schwenkrahmens (7) auf- und abverschiebbar gelagerter Schlitten (6) ausgebildete Träger über einen Schwenkhebel (13) mit einem auf dem Schwenkrahmen (7) gelagerten Kniehebel (12) verbunden ist, der über einen weiteren Schwenkhebel (11) mit einer im Gewindeeingriff mit der Stellspindel (8) stehenden, auf dem Lagerbügel (9) geführten Mutter (10) ist.

5. Holzbearbeitungsmaschine nach einem der vorhergehenden Ansprüche, dadurch gekennzeichnet, daß die Betätigungswelle (14) eine im Zahneingriff mit wenigstens einem gestellfest angeordneten Lagerschild (15) stehende, vorzugsweise an einen auf der Betätigungswelle (14) fixierten Ring (34) angeformte Verzahnung (33) aufweist und daß der Lagerschild (15) hierzu mit einer vorzugsweise als Randverzahnung (32) ausgebildeten, zur im Bereich der Verschneidung des Bearbeitungswerkzeugs (4) mit der Oberfläche des Tisches (1) liegenden Schwenkachse (a) des Schwenkrahmens (7) konzentrischen Zahnreihe versehen ist und der außerhalb dieser Zahnreihe mindestens eine hierzu konzentrische Bogenausnehmung (35) aufweist in die wenigstens ein im Bereich einer Stirnseite des Schwenkrahmens (7) befestigter Gleitschuh (36) eingreift, wobei die Bogenausnehmungen vorzugsweise als Bogenschlitze (35) ausgebildet sind und die Gleitschuhe (36) jeweils ein den zugeordneten Bogenschlitz (35) durchgreifendes Formstück (38) aufweisen.

6. Holzbearbeitungsmaschine nach Anspruch 5, dadurch gekennzeichnet, daß die Betätigungswelle (14) über die Länge des Schwenkrahmens (7) durchgeht, daß das Maschinengestell mit einem vorderen und einem hinteren Lagerschild (15) versehen ist, der jeweils im Zahneingrif fmit der Betätigungswelle (14) ist und vorzugsweise an einer quer zur Ebene des Bearbeitungswerkzeugs verlaufenden, am oberen Ende von Gestellbeinen (2) befestigten Traverse (16) befestigt ist und daß der Schwenkrahmen im Bereich seiner beiden Stirnseiten mit vorzugsweise zwei Gleitschuhen (36) versehen ist, denen vorzugsweise jeweils eine eigene Bogenausnehmung (35) des jeweils benachbarten Lagerschilds (15) zugeordnet ist.

7. Holzbearbeitungsmaschine nach einem der vorhergehenden Ansprüche 5 bis 6, dadurch gekennzeichnet, daß der Schwenkrahmen (7) im Bereich seiner Stirnseiten jeweils ein am jeweils benachbarten Lagerschild (15) anliegendes, vorzugsweise auf Distanzstücken (41) aufgenommenes Gleitteller (40) aufweist, an dem die zugehörigen Gleitschuhe (36) befestigt sind, die vorzugsweise durch jeweils eine Halteschraube (37) am Schwenkrahmen (7) befestigt sind und einen den Rand des zugeordneten Bogenschlitzes (35) hintergreifenden Flansch (39) aufweisen.

8. Holzbearbeitungsmaschine nach einem der vorhergehenden Ansprüche, dadurch gekennzeichnet, daß der Schwenkrahmen (7) mit einer über seine Länge durchgehenden, den die Stellspindel (8) aufnehmenden Lagerbügel (9) aufnehmenden, als vorzugsweise von der Betätigungswelle (14) durchgriffenes Rohr ausgebildeten Tragschiene (44) versehen ist, auf die vorzugsweise zwei mit ihren oberen Enden am Joch eines auf die Tragschiene (44) aufgesetzten Portalrahmens (47) aufgenommene Säulen (45) lotrecht aufgesetzt sind, auf denen am Schlitten (6) befestigte Gleitmuffen (46) gleitend geführt sind.

9. Holzbearbeitungsmaschine nach Anspruch 8, dadurch gekennzeichnet, daß der Schwenkrahmen (7) einen an die Tragschiene (44) angesetzten, nach oben offenen Spanfangkasten (51) aufweist, in den das Bearbeitungswerkzeug (4) eingreift und der im Bereich seines unteren, vorzugsweise über die stationären Lagerschilde (15) nach unten vorstehenden Endes mit einer vorzugsweise stirnseitig angeordneten Auswurföffnung (52) versehen ist, an die ein dem Handrad (17) gegenüberliegend aus dem Maschinengestell herausgeführter Auswurfstutzen (53) angesetzt ist und daß der vorzugsweise als durch einen teilweise offenen Kasten gebildeten Schlitten (6) ausgebildete Träger auf seiner Unterseite einen hängend angeordneten Antriebsmotor (48) und auf seiner Oberseite Lagerböcke (49) für die das Bearbeitungswerkzeug (4) aufnehmende Welle (5) trägt, die mit der Motorwelle mittels eines vorzugsweise als Riementrieb (50) ausgebildeten Vorgeleges verbunden ist.

10. Holzbearbeitungsmaschine nach einem der vorhergehenden Ansprüche, dadurch gekennzeichnet, daß dem Schwenkrahmen (7) ein vorzugsweise als einen Lagerschild (15) durchgreifende, mit einer gestellfesten Mutter (42) in Gewindeeingriff stehende Spannschraube (43) ausgebildeter Blockierstift zugeordnet ist.

## Claims

1. A wood working machine and more particularly a circular saw, comprising a table (1) mounted on a machine frame (2 and 3) and having a tool (4) extending through it, which tool is arranged on a drive shaft (5) provided underneath the table (1) and positioned on a carrier (6) able to be adjusted in height by means of a lead screw (8), such carrier (6) being mounted together with the lead screw (8) on a pivoting frame (7), which is pivoted in the machine frame and is able to be actuated by means of a setting device, characterized in that the pivoting frame (7) is able to be adjusted by means of an axially held actuating shaft (14) mounted on the machine frame (7) and projecting out of the machine frame, on which shaft (14) there are mounted, for free rotation thereon, on the one hand a drive wheel, which is locked in rotation with the lead screw (8), and on the other hand a hand wheel (17) positioned outside the machine frame, such hand wheel being able to be moved in the axial direction and being able to be coupled in its end positions either with the drive wheel (20) or alternatively with the actuating shaft (14).

2. The wood working machine as claimed in claim 1, characterized in that the actuating shaft (14) and the drive wheel (20) mounted thereon are furnished with oppositely arranged and spaced coaxial rings of teeth (pinons 26 and, respectively, 27), between which the hand wheel (17) is arranged, which is furnished with a sliding bushing (23) encircling the actuating shaft (14), which bushing at ends thereof is provided with teeth (inner teeth rings 24 and, respectively, 25) adapted to be brought into engagement with the rings of teeth (pinons 26 and, respectively, 27), and preferably the drive wheel (20) is provided with a hub (28) having the associated ring of teeth, and the actuating shaft (14) is fixedly connected with a sleeve (29) bearing the associated ring of teeth, on which sleeve there is borne a spring (31) encircling the actuating shaft (14) which spring engages a sliding bushing (23), which is mounted on the hub (28) or, respectively, on the sleeve (29).

3. The wood working machine as claimed in any one of the preceding claims, characterized in that the lead screw (8), which is fixed in the axial direction, is arranged approximately parallel to the actuating shaft (14), which extends also approximately in the axial direction, and furthermore such lead screw (8) is furnished with a drive wheel (18) connected by means of a circulating element such as a chain (19), with the drive wheel (20).

4. The wood working machine as claimed in any one of the preceding claims, characterized in that the lead screw (8) is journaled on a bearing fork (9) which is pivotally mounted on the pivot frame (7) and able to be adjusted by means of a set screw (22) and in that the carrier, which is preferably in the form of a carriage (6) borne so as to be able to be moved upwards and downwards on an associated longitudinal guide of the pivot frame (7), is connected via a pivoting lever (13) with a bell crank (12) borne on the pivot frame (7), which crank is connected via a further pivoting lever (11) with a nut (10) which is guided on the bearing fork (9) and is screw threadedly engaged with the lead screw (8).

5. The wood working machine as claimed in any one of the preceding claim, characterized in that the actuating shaft (14) has teeth (33) which are preferably molded on a ring (34) fixed on the actuating shaft (14) and which are in mesh with at least one bearing plate (15) arranged stationarily in relation to the frame, and in that the bearing plate (15) for this purpose is provided with a row of teeth, which is preferably designed in the form of edge teeth (32) and centered on the pivot axis (a) located adjacent to the intersection between the tool (4) and the surface of the table (1), of the pivot frame (7), such bearing plate (15) having, clear of such row of teeth, at least one arcuate recess (35) coaxially placed in relation to the row of teeth, in which recess there fits a sliding shoe (36) arranged adjacent to one end side of the pivot frame (7), such arcuate recesses preferably being designed in the form of arcuate slots (35) and the sliding shoes (36) respectively have a key (38) fitted through the associated arcuate slot (35).

6. The wood working machine as claimed in claim 5, characterized in that the actuating shaft (14) extends along the length of the pivot frame (7), that the machine frame is furnished with a front and a rear bearing plate (15), which respectively is in mesh with the actuating shaft (14) and is preferably attached on a crosspiece (16) extending transversely in relation to the plane of the tool and fixed to the upper end of frame legs (2), and in that the pivot frame is provided adjacent to its two end sides with preferably two sliding shoes (36), with which there is preferably associated a separate arcuate recess (35) in the respectively adjacent bearing plate (15).

7. The wood working machine as claimed in either of the claims 5 and 6, characterized in that the pivot frame (7) has a adjacent to its end sides respectively a sliding plate (40) resting against the respectively adjacent bearing plate (15) and preferably mounted on distance pieces (41), on which plate (40) the respective sliding shoes (36) are attached, which preferably are secured by a respective holding screw (37) on the pivot frame (7) and possess a flange (39) fitting round the edge of the respective arcuate slot (35).

8. The wood working machine as claimed in any one of the preceding claims, characterized in that the pivot frame (7) is furnished with a mounting rail (44) extending along the full length thereof, carrying the bearing yoke (9) receiving lead screw (8) and designed in the form of a tube with the actuating shaft (14) extending through it, on which rail (44) preferably two columns (45) are mounted upright, which have upper ends thereof mounted on the yoke of a portal frame (47) carried on the carrying rail (44), on which columns (45) sliding sleeves (46) are slidingly guided, which are secured to the carriage (6).

9. The wood working machine as claimed in claim 8, characterized in that the pivot frame (7) has an upwardly open sawdust box (51) mounted on the carrying rail (44), in which box the tool (4) extends and which adjacent to its lower end, which preferably projects past the stationary bearing plates (15) is furnished with an ejection opening (52), preferably arranged at the end side, on which opening (52) an ejection chute (52) is mounted which is opposite to the hand wheel (17) and extends out of the machine frame, and in that the carrier, which is preferably designed in the form of a carriage (6) constituted by a partly open box, on its lower side has a dependent drive motor (48) and on its upper side has bearing units (49) for the shaft (5) mounting the tool (4), such shaft being connected with the motor shaft by means of a transmission designed in the form of a belt drive (50).

10. The wood working machine as claimed in any one of the preceding claims, characterized in that a locking pin is associated with the pivoting frame (7), such pin being preferably in the form of a set screw (43) extending through one bearing plate (15) and in screw threaded engagement with a nut (42) fixed in relation to the frame.

## Revendications

1. Machine à travailler le bois, notamment scie circulaire présentant un plateau (1) calé sur un bâti (2, 3) de la machine, et traversé par un outil de façonnage (4) calé sur un arbre entraînable (5), prévu au-dessous du plateau (1) et positionné sur un support (6) qui est réglable en hauteur au moyen d'une broche de réglage (8) et est calé, conjointement à la broche de réglage (8), sur un châssis pivotant (7) monté à pivotement dans le bâti de la machine, et actionnable au moyen d'un dispositif d'ajustement, caractérisée par le fait que le châssis pivotant (7) peut être réglé au moyen d'un arbre d'actionnement (14) qui occupe une position fixe dans le sens axial sur ledit châssis, fait saillie au-delà du bâti de la machine et sur lequel sont calés, à rotation libre, une roue d'entraînement (20) assujettie en rotation à la broche de réglage (8), ainsi qu'un volant (17) qui est positionné à l'extérieur du bâti de la machine, peut coulisser dans le sens axial et peut être alternativement accouplé, dans ses positions extrêmes, à la roue d'entraînement (20) ou à l'arbre d'actionnement (14).

2. Machine à travailler le bois, selon la revendication 1, caractérisée par le fait que l'arbre d'actionnement (14) et la roue d'entraînement (20) calée sur ce dernier sont pourvus de couronnes dentées (pignons dentés respectifs 26 et 27) coaxiales, opposées à distance l'une de l'autre, et entre lesquelles est interposé le volant (17) muni d'un coussinet de glissement (23) qui emprisonne l'arbre d'actionnement (14) et est doté, à ses extrémités, de dentures (couronnes dentées internes respectives 24 et 25) pouvant être mises en prise avec les couronnes dentées (pignons dentés respectifs 26 et 27), machine dans laquelle de préférence la roue d'entraînement (20) est munie d'un moyeu (28) présentant la couronne dentée associée, et l'arbre d'actionnement (14) est relié rigidement à une douille (29) qui porte la couronne dentée correspondante, et contre laquelle prend appui un ressort (31) entourant l'arbre d' actionnement (14) et venant s'appliquer contre un collet intérieur (30) du coussinet de glissement (23) du volant (17), respectivement calé sur le moyeu (28) ou sur la douille (29).

3. Machine à travailler le bois, selon l'une des revendications précédentes, caractérisée par le fait que la broche de réglage (8), de préférence fixe dans le sens axial, est disposée à peu près parallèlement à l'arbre d' actionnement (14), fixe lui aussi dans le sens axial, et est pourvue d'une roue menante (18) reliée, à la roue d'entraînement (20), par l'entremise d'un élément à révolution préférentiellement réalisé sous la forme d'une chaîne (19).

4. Machine à travailler le bois selon l'une des revendications précédentes, caractérisée par le fait que la broche de réglage (8) est montée sur un étrier de portée (9) calé à pivotement sur le châssis pivotant (7), et réglable au moyen d'une vis de blocage (22) ; et par le fait que le support, de préférence réalisé sous la forme d'un chariot (6) monté à coulissements ascendant et descendant sur un guide longitudinal associé du châssis pivotant (7) est relié, par l'intermédiaire d'un levier pivotant (13), à un levier (12) à genouillère qui est monté sur le châssis pivotant (7) et est relié, par l'entremise d'un autre levier pivotant (11), à un écrou (10) guidé sur l'étrier de portée (9) et en prise par filetage avec la broche de réglage (8).

5. Machine à travailler le bois, selon l'une des revendications précédentes, caractérisée par le fait que l'arbre d'entraînement (14) présente une denture (33) qui est en prise d'engrènement avec au moins un flasque de portée (15) consigné à demeure sur le bâti et est préférentiellement ménagée d'un seul tenant sur une bague (34) calée rigidement sur l'arbre d'actionnement (14) ; et par le fait que le flasque de portée (15) est doté, à cet effet, d'une rangée de dents réalisée, de préférence comme une denture marginale (32) et concentrique à l'axe de pivotement (a) du châssis pivotant (7), situé dans la région de l' intersection de l'outil de façonnage (4) avec la surface du plateau (1), et présente, à l'extérieur de cette rangée de dents, au moins un évidement curviligne (35) qui est concentrique à ladite rangée, et dans lequel s'engage au moins un patin de glissement (36) fixé dans la région d'une face extrême du châssis pivotant (7), machine dans laquelle les évidements curvilignes sont préférentiellement conçus comme des fentes (35) en arc de cercle, et les patins de glissement (36) comportent respectivement une pièce profilée (38) qui traverse la fente associée (35) en arc de cercle.

6. Machine à travailler le bois, selon la revendication 5, caractérisée par le fait que l'arbre d' actionnement (14) s'étend d'un trait sur la longueur du châssis pivotant (7) ; par le fait que le bâti de la machine est muni d'un flasque antérieur de portée et d'un flasque postérieur de portée (15), qui est respectivement en prise d'engrènement avec l'arbre d'actionnement (14), et est de préférence fixé à une traverse (16) s'étendant transversalement par rapport au plan de l'outil de façonnage, et assujettie à l'extrémité supérieure de montants (2) du bâti ; et par le fait que le châssis pivotant est de préférence équipé, dans la région de ses deux faces extrêmes, de deux patins de glissement (36) auxquels est préférentiellement affecté, à chaque fois, un propre évidement curviligne (35) du flasque de portée (15) respectivement voisin.

7. Machine à travailler le bois, selon l'une des revendications précédentes 5 à 6, caractérisée par le fait que le châssis pivotant (7) comporte à chaque fois, dans la région de ses faces extrêmes, un disque de glissement (40) de préférence calé sur des pièces d'espacement (41), appliqué contre le flasque de portée (15) respectivement voisin, et auquel sont fixés les patins de glissement (36) associés qui sont, de préférence, assujettis au châssis pivotant (7) par l'intermédiaire d'une vis respective de retenue (37), et présentent une aile (39) emprisonnant par-derrière le bord de la fente correspondante (35) en arc de cercle.

8. Machine à travailler le bois, selon l'une des revendications précédentes, caractérisée par le fait que le châssis pivotant (7) est pourvu d'un rail de support (44) qui s'étend d'un trait sur sa longueur, reçoit l'étrier de portée (9) logeant la broche de réglage (8), est conçu comme un tube de préférence parcouru, d'un bout à l'autre, par l'arbre d'actionnement (14), et sur lequel, de préférence, sont rapportées perpendiculairement deux colonnes (45) qui sont montées, par leurs extrémités supérieures, sur le joug d'un cadre (47) en portique rapporté sur le rail de support (44), et sur lesquelles sont guidés à coulissement, des manchons de glissement (46) fixés au chariot (6).

9. Machine à travailler le bois selon la revendication 8, caractérisée par le fait que le châssis pivotant (7) présente un caisson (51) de recueillement des copeaux, ouvert vers le haut, rapporté sur le rail de support (44), dans lequel l'outil de façonnage (4) s'engage, et qui est pourvu, dans la région de son extrémité inférieure saillant de préférence vers le bas, au-delà des flasques fixes de portée (15), d'un orifice d'éjection (52) préférentiellement disposé à la face extrême, et auquel se rattache un raccord d'éjection (53) dépassant du bâti de la machine en vis-à-vis du volant (17) ; et par le fait que le support, de préférence réalisé en tant que chariot (6) formé d'un caisson partiellement ouvert, porte sur sa face inférieure un moteur d'entraînement (48) installé en suspension et, sur sa face supérieure, des sabots de portée (49) destinés à l'arbre (5) qui reçoit l'outil de façonnage (4) et est relié à l'arbre du moteur au moyen d'une transmission intermédiaire préférentiellement conçue comme une transmission par courroie (50).

10. Machine à travailler le bois, selon l'une des revendications précédentes, caractérisée par le fait qu'un pointeau d'arrêt, de préférence conçu comme une vis de blocage (43) traversant un flasque de portée (15) et en prise par filetage avec un écrou (42) assujetti au bâti est associé au châssis pivotant (7).
